# FASCICULE DE BREVET EUROPEEN

(11) **EP 3 422 836 B1**
(45) Date de publication et mention de la délivrance du brevet: **08.04.2020**
(21) Numéro de dépôt: 17707413.5
(22) Date de dépôt: 17.02.2017
(51) Int. Cl.: A01B 1/02

(54) **OUTIL A FRAGMENTER ET A RETOURNER DE LA TERRE, NOTAMMENT DE TYPE BECHE OU PELLE**
WERKZEUG ZUM AUFBRECHEN UND WENDEN VON ERDREICH, INSBESONDERE EIN SPATEN- ODER EINE SCHAUFEL
TOOL FOR BREAKING UP AND TURNING OVER SOIL, PARTICULARLY OF A SPADE OR SHOVEL TYPE

(30) Priorité: 29.02.2016 FR 1651683
(43) Date de publication de la demande: 09.01.2019
(73) Titulaire: Butin, Ghislain, 69960 Corbas (FR)
(72) Inventeur: Butin, Ghislain, 69960 Corbas (FR)
(74) Mandataire: LLR
(86) Numéro de dépôt international: PCT/IB2017/050908
(87) Numéro de publication internationale: WO 2017/149404

(56) Documents cités:
- DE-C- 817 049
- DE-C- 848 117
- FR-A- 1 016 787
- FR-A- 1 140 588
- FR-A1- 2 676 324
- OA-A- 2 067
- US-A1- 2005 081 409

## Description

La présente invention concerne un outil à fragmenter et à retourner de la terre, notamment de type bêche ou pelle. Le terme "terre" est utilisé par simplification puisque cet outil est principalement utilisable pour travailler la terre ; il doit cependant être interprété de la façon la plus générale possible, l'outil en question pouvant être utilisé avec tous types de sols ou de substrats susceptibles de devoir être travaillés au moyen d'un tel outil.

Une bêche ou une pelle comprend un manche relié à une partie de travail. La manipulation d'un tel outil est fatigante et peut causer des douleurs articulaires, en particulier un mal de dos.

La présente invention vise à remédier à cet inconvénient essentiel.

Un objectif principal de l'invention est donc de fournir un outil à fragmenter et à retourner de la terre, qui soit nettement moins fatigant, et donc possiblement moins douloureux, à utiliser qu'un outil existant, tout en conservant une manipulation facile et sûre.

Un autre objectif de l'invention est de fournir un outil dont le sens de déversement de la terre puisse être adapté aux besoins de l'utilisateur.

Les publications de demandes de brevet N° FR 1 016 787 A, DE 848 117 C, DE 817 049 C, FR 1 140 588 A, OA 2 067 A, US 2005/081409 A1 et FR 2 676 324 A1 illustres différents dispositifs de l'art antérieur ne permettant pas de parfaitement atteindre ces objectifs.

L'outil concerné comprend de manière connue en soi un manche et une partie de travail.

Pour atteindre au moins l'objectif principal ci-dessus, l'outil selon l'invention comprend :
- une embase de support, présentant un pied d'appui contre la terre et un montant ;
- un ensemble basculable allongé, monté basculable sur ledit montant selon un axe perpendiculaire à l'axe longitudinal de cet ensemble basculable ; l'ensemble basculable est mobile entre une première position, d'insertion de la partie de travail dans la terre, une deuxième position, de soulèvement d'une motte de terre fragmentée au moyen de l'outil, et une troisième position, de déversement de cette motte de terre ; l'ensemble basculable comprend, sur un côté de l'axe de basculement, une première partie de manche d'outil et, sur l'autre côté de cet axe de basculement, un sous-ensemble comprenant une deuxième partie de manche d'outil et la partie de travail de la terre ; ce sous-ensemble est monté pivotant par rapport à la première partie de manche d'outil selon l'axe longitudinal de la deuxième partie de manche d'outil, ce pivotement permettant de faire tourner la partie de travail de ladite deuxième position de soulèvement de la motte de terre fragmentée, à ladite troisième position de déversement de cette motte de terre ;

- des moyens de commande du pivotement dudit sous-ensemble lorsque l'ensemble basculable passe de ladite deuxième position à ladite troisième position ;
- un verrou mobile, déplaçable entre une position de blocage du pivotement dudit sous-ensemble et une position de déblocage de ce pivotement ; et
- des moyens de déplacement du verrou, plaçant automatiquement ce verrou dans sa position de blocage lorsque l'ensemble basculable est dans ladite première position, et faisant passer ce verrou de cette position de blocage à sa position de déblocage lorsque ledit ensemble basculable est déplacé de ladite deuxième position à ladite troisième position, ce déblocage intervenant juste avant que lesdits moyens de commande réalisent la commande du pivotement du sous-ensemble.

Ainsi, un utilisateur incline l'outil pour insérer ladite partie de travail dans la terre, de manière à fragmenter la portion de terre située devant cette partie de travail, puis ramène l'ensemble de l'outil dans une position non inclinée dans laquelle ledit montant est sensiblement vertical ; lors de cette insertion puis de cette fragmentation, l'ensemble basculable est dans ladite première position d'insertion, et donc le pivotement de la partie de travail selon l'axe de la deuxième partie de manche est bloqué par le verrou. Ce blocage rend sûre et efficace la manipulation de l'outil lors de l'insertion de la partie de travail dans la terre puis lors de la fragmentation de la terre, de sorte que l'outil selon l'invention est utilisable presque de la même façon qu'une bêche classique.

L'utilisateur appuie ensuite sur la première partie de manche de façon à faire basculer l'ensemble basculable par rapport à l'embase jusqu'à ladite deuxième position, de soulèvement de cette motte de terre fragmentée puis jusqu'à ladite troisième position, de déversement de la motte de terre, permettant de retourner cette motte au moins partiellement ; au début du basculement vers la deuxième position, le pivotement de la partie de travail reste bloqué, évitant tout déversement intempestif de la motte de terre ; au début du basculement vers ladite troisième position, le verrou est libéré puis le pivotement du sous-ensemble est commandé par lesdits moyens de commande, réalisant ainsi le déversement de la motte de terre.

Grâce à ces dispositions, il est obtenu un outil nettement moins fatigant, et possiblement nettement moins douloureux, à utiliser qu'un outil homologue existant, qui conserve cependant une manipulation facile et sûre.

Les moyens de commande sont de préférence sous la forme d'une surface formant came aménagée sur l'embase et d'un doigt faisant saillie latéralement de ladite deuxième partie de manche, ce doigt venant porter contre cette surface formant came lors du basculement de l'ensemble basculable de ladite deuxième position à ladite troisième position.

Avantageusement, dans ce cas,
- la surface formant came est aménagée sur une pièce séparée de l'embase, apte à être montée sur un côté latéral de l'embase ou sur le côté latéral opposé de cette embase, et
- ladite deuxième partie de manche comprend deux doigts faisant saillie latéralement, diamétralement opposés l'un à l'autre, le doigt situé sur le côté latéral sur lequel se trouve ladite pièce séparée étant apte à rencontrer la surface formant came aménagée par cette pièce pour faire pivoter ledit sous-ensemble.

Ainsi, selon le côté latéral sur lequel se trouve ladite surface formant came, l'un ou l'autre des doigts est actif et le pivotement dudit sous-ensemble peut être réalisé dans l'un ou l'autre des sens de pivotement de ce sous-ensemble, permettant ainsi à l'utilisateur de choisir le côté vers lequel se déverse la motte de terre.

Il sera compris que, par "côté latéral", on entend un côté qui est latéral par rapport à un plan médian longitudinal de l'outil.

Selon une forme de réalisation possible de l'invention, dans ce cas de surface formant came et de doigt faisant saillie latéralement, le verrou est sous la forme d'une plaquette montée basculante sur ladite première partie de manche selon un axe transversal à l'axe longitudinal de cette première partie de manche, cette plaquette formant une extension longitudinale apte à venir en engagement avec une encoche aménagée dans l'extrémité de ladite deuxième partie de manche, ladite plaquette comprenant une première extension latérale apte, lors du passage de l'ensemble basculant de ladite deuxième position à ladite troisième position, à rencontrer ladite surface formant came ; cette première extension latérale est aménagée de telle sorte que, dans ladite deuxième position, elle se trouve située à un niveau légèrement inférieur, dans un plan vertical, à celui auquel se trouve le doigt situé sur le même côté qu'elle, de sorte que ladite première extension latérale est apte à rencontrer ladite surface formant came juste avant que le doigt situé du même côté que ladite première extension latérale rencontre cette même surface formant came.

Cette première rencontre réalise un basculement de la plaquette dans un sens réalisant l'extraction de l'extension longitudinale hors de ladite encoche, de façon à débloquer le pivotement dudit sous-ensemble juste avant que ce pivotement ne débute.

Lorsque la surface formant came est constituée par une pièce séparée, comme mentionné plus haut, la plaquette comprend alors avantageusement une deuxième extension latérale, sur un côté latéral opposé à celui sur lequel se trouve ladite première extension latérale, cette deuxième extension latérale étant symétrique à la première extension latérale par rapport à un plan longitudinal médian de l'outil.

Le verrou que constitue cette plaquette peut ainsi être actionné quelle que soit la position de ladite pièce séparée, et donc quel que soit le sens de pivotement du sous-ensemble choisi par l'utilisateur.

Ladite plaquette pourrait être amenée en position d'engagement avec l'encoche de ladite deuxième partie de manche par un moyen mécanique tel qu'un ressort. De préférence, toutefois, l'axe de basculement du verrou est situé à une distance de ladite encoche telle que ce verrou soit incliné en direction de ladite deuxième partie de manche tant dans ladite première, deuxième ou troisième position et que son maintien automatique en position d'engagement dans ladite encoche soit réalisé par gravité.

Lorsque la partie de travail se trouve dans ladite position inclinée de déversement, le sous-ensemble peut être ramené dans sa position de d'insertion soit par des moyens mécaniques tels qu'un ressort de rappel, soit simplement par un appui de la partie de travail contre la terre réalisant le pivotement du sous-ensemble.

Selon une autre forme de réalisation de l'invention, le verrou est sous la forme d'un doigt coulissant au travers de ladite première partie de manche et venant en appui contre l'embase lorsque l'ensemble basculable est amené en position de soulèvement puis de déversement, cette venue en appui déplaçant ce doigt entre les positions de blocage du pivotement dudit sous-ensemble et de déblocage de ce pivotement, le doigt coulissant étant maintenu normalement dans ladite position de blocage au moyen d'un ressort de rappel engagé sur lui, prenant appui contre ce doigt d'une part et contre ladite première partie de manche, du côté de l'embase.

Selon une forme de réalisation simple de l'invention dans ce cas, la deuxième partie de manche est tubulaire et présente une encoche à son extrémité opposée à celle reliée à la partie de travail, et le doigt coulissant présente une extension latérale venant en engagement dans cette encoche en position de blocage du pivotement du sous-ensemble, et venant hors de cette encoche, donc en face de la cavité tubulaire de la deuxième partie de manche, en position de déblocage de ce pivotement.

De préférence, ladite première partie de manche d'outil est coudée de telle sorte qu'une partie de base qu'elle comprend, située principalement d'un côté de ce coude, forme un angle de l'ordre de 135° avec une partie de manche proprement dit, située de l'autre côté de ce coude.

Cette forme coudée de cette première partie de manche évite à l'utilisateur d'avoir à trop se baisser pour faire pivoter ledit ensemble basculable lorsqu'il amène cet ensemble basculable de ladite deuxième position à ladite troisième position.

De préférence, le pied d'appui comprend une plaquette de positionnement de l'outil contre le sol, reliée à son côté inférieur, cette plaquette présentant une portion faisant saillie vers l'arrière de l'outil, qui s'étend dans un plan perpendiculaire à l'axe longitudinal du montant relié au pied appui, et une portion faisant saillie vers l'avant de l'outil, qui s'étend selon un angle de l'ordre de 45° par rapport à ce plan.

Dans ladite position d'insertion, c'est la portion avant de la plaquette qui vient en appui contre le sol, formant un certain repère de l'inclinaison adéquate de l'outil, ou formant une butée de limitation de cette inclinaison, tandis que dans ladite position de soulèvement puis de déversement, c'est la portion arrière de cette plaquette qui vient en appui contre le sol, dans le même but de repérer la position de l'outil par rapport au sol ou de positionner cet outil par rapport à ce sol.

Selon une forme de réalisation possible de l'invention, ladite première partie de manche de l'outil est en deux sous-parties, dont une partie de base reliée à ladite deuxième partie de manche d'outil et une partie formant manche proprement dit, cette partie formant manche étant reliée de façon pivotante à ladite partie de base, et/ou étant démontable par rapport à cette partie de base, de façon à rendre ledit outil plus facilement transportable.

Selon une forme de réalisation possible de l'invention, lesdits moyens de commande sont sous la forme d'une surface formant came aménagée sur l'embase et d'une plaquette transversale faisant saillie latéralement de ladite deuxième partie de manche, cette plaquette transversale présentant un bord inférieur courbe qui vient porter contre cette surface formant came lors du passage de l'ensemble basculable allongé de ladite deuxième position à ladite troisième position.

De préférence, dans ce cas, le verrou est sous la forme d'une plaquette montée basculante sur ladite première partie de manche selon un axe transversal à l'axe longitudinal de cette première partie de manche, cette plaquette étant apte à venir en engagement avec une encoche aménagée dans l'extrémité de ladite deuxième partie de manche, ladite plaquette comprenant un doigt apte, lors du passage de l'ensemble basculant de ladite deuxième position à ladite troisième position, à rencontrer ladite surface formant came ; ce doigt est disposé de telle sorte qu'il vienne rencontrer ladite surface formant came avant que ledit bord inférieur courbe de la plaquette transversale rencontre la surface formant came lors du passage de l'ensemble basculable allongé de ladite deuxième position à ladite troisième position, de façon à libérer le verrou avant que ce bord inférieur courbe porte contre la surface formant came.

De préférence, deux pions sont solidaires, pour l'un d'entre eux, du montant, et, pour l'autre d'entre eux, de ladite première partie de manche d'outil ; ces pions sont destinés à recevoir un ressort qui est comprimé lorsque l'ensemble basculable allongé passe de ladite première position à ladite deuxième position.

De préférence, ladite première partie de manche d'outil est formée par une pièce unique présentant une forme courbe au-delà du verrou.

L'invention sera bien comprise, et d'autres caractéristiques et avantages de celle-ci apparaîtront, en référence au dessin schématique annexé, représentant, à titre d'exemples non limitatifs, deux formes de réalisation possibles de l'outil concerné.
La figure 1 est une vue de cet outil de côté, selon une première forme de réalisation ;
la figure 1A est une vue de côte, à échelle agrandie, d'une partie de cet outil, comportant un verrou ;
la figure 2 est une vue partielle de l'outil, en perspective selon un point arrière et de côté droit de cet outil, montrant notamment le verrou dans une position de blocage ;
la figures 3 est une vue de l'outil de côté, montrant cet outil dans une première position, d'insertion dans la terre d'une partie de travail que comprend l'outil ;
la figure 4 est une vue de l'outil de côté dans une deuxième position, de soulèvement d'une motte de terre ;
la figure 5 est une vue de l'outil dans une troisième position, de déversement d'une motte de terre ;
la figure 6 est une vue partielle de l'outil, similaire à la figure 2, montrant le verrou mobile dans une position de déblocage ;
la figure 7 est une vue de l'outil en perspective selon une deuxième forme de réalisation ;
la figure 8 est une vue partielle de l'outil, en perspective et à échelle agrandie, dans ladite première position, d'insertion dans la terre de la partie de travail que comprend l'outil ;
la figure 9 est une vue de l'outil similaire à la figure 8, dans ladite deuxième position, de soulèvement d'une motte de terre ; et
la figure 10 est une vue de l'outil similaire à la figure 9, dans ladite troisième position, de déversement d'une motte de terre.

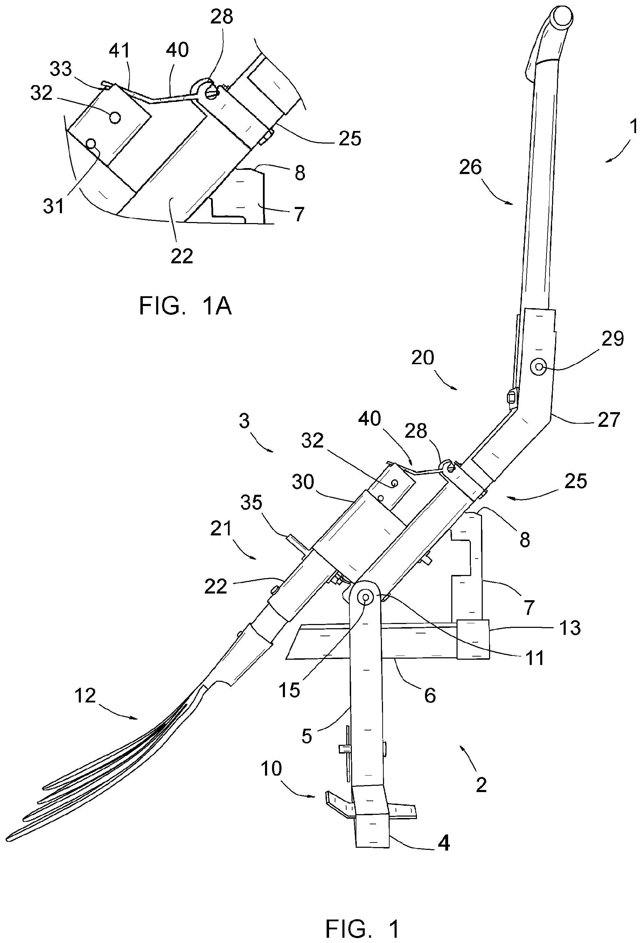

La figure 1 montre un outil 1 utilisable pour fragmenter et retourner de la terre, qui comprend une embase de support 2 et un ensemble basculable allongé 3.

L'embase de support 2 comprend un pied d'appui 4, un montant 5, un longeron 6 et une plaque 7 formant une surface de came 8.

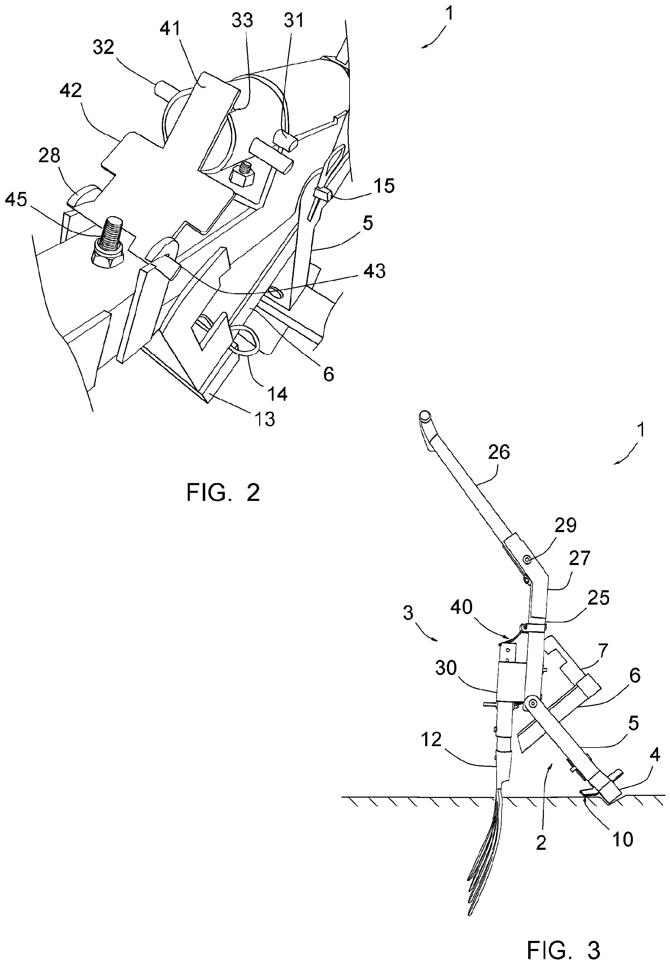

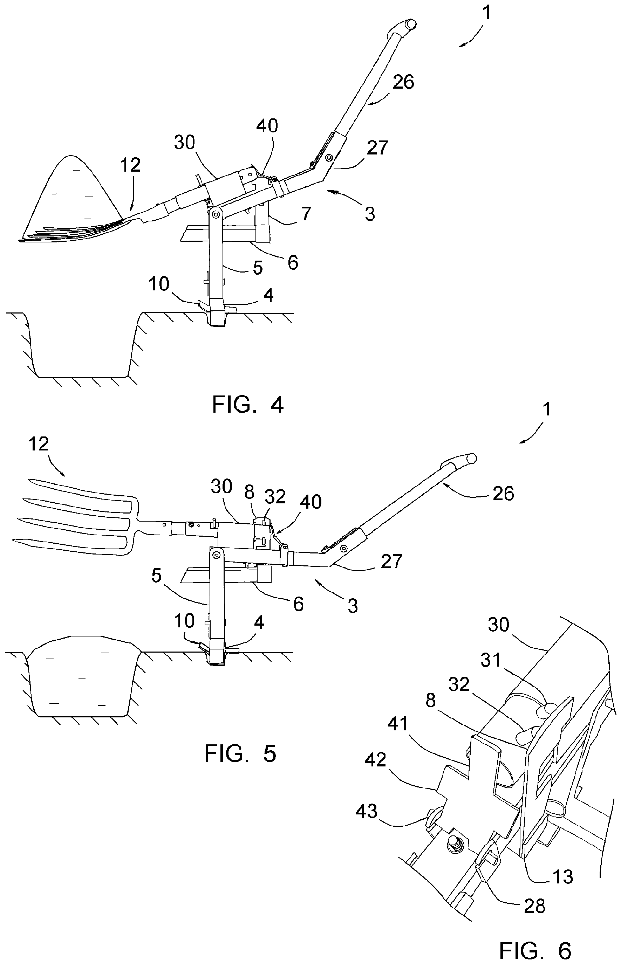

Le pied d'appui 4 est formé par une traverse s'étendant transversalement à un plan longitudinal médian de l'outil 1. Il comprend une plaquette inférieure pliée 10, faisant saillie de part et d'autre de lui, qui présente une portion arrière s'étendant dans un plan perpendiculaire à l'axe longitudinal du montant 5 et une portion avant s'étendant selon un angle de l'ordre de 45° par rapport à ce plan. Cette plaquette 10 permet un positionnement de l'outil 1 contre le sol 100 : comme le montre la figure 3, la portion avant de cette plaquette 10 vient en appui contre le sol 100 lorsque l'outil 1 est dans la position d'insertion montrée sur la figure 3, tandis que c'est la portion arrière de cette plaquette 10 qui vient en appui contre le sol dans les positions non inclinées de l'outil 1 montrées sur les figures 4 et 5.

Le montant 5 présente deux pattes latérales 11 à sa partie supérieure, délimitant un espace entre elles et qui sont percées de deux trous coaxiaux. Ces pattes latérales 11 forment ainsi une chape d'articulation de l'ensemble allongé basculable 3.

Le longeron 6 est fixé au montant 5 et s'étend selon une direction perpendiculaire à celui-ci. Au niveau de son extrémité située du côté de l'outil 1 opposé à la partie de travail 12 que comprend cet outil, il comporte la plaque 7 formant la surface de came 8. Cette plaque 7 est apte à être montée de façon amovible sur le longeron 6, soit sur le côté latéral droit de ce longeron 6, soit sur le côté latéral gauche de celui-ci. Pour réaliser ce montage, comme visible sur la figure 2, le longeron 6 est solidaire d'une pièce 13 en forme de U, chaque paroi latérale de cette pièce 13 formant, avec la paroi latérale correspondante du longeron 6, une fente de réception de la partie inférieure de la plaque 7. Le montage de la plaque 7 dans cette fente est assuré par une goupille 14.

Il sera compris que les termes "droit" et "gauche" sont à considérer par rapport au plan médian longitudinal de l'outil 1, et que le terme latéral est à considérer en référence à la direction longitudinale du longeron 6.

La surface de came 8 est simplement constituée par une découpe appropriée, légèrement convexe, du bord d'extrémité de la plaque 7 opposé à la portion de cette plaque destinée à être engagée entre le longeron 6 et la pièce 13.

L'ensemble allongé basculable 3 est monté pivotant sur l'extrémité du montant 5 par engagement d'une portion de montage qu'il comprend, percée d'un trou transversal, entre les pattes latérales 11, les trous de ces pattes 11 et le trou de cette portion de montage étant traversés par une broche de basculement 15. L'ensemble 3 est ainsi basculable sur le montant 5 selon un axe perpendiculaire à l'axe longitudinal de l'outil 1.

L'ensemble 3 comprend, sur un côté de l'axe de basculement, une première partie 20 de manche d'outil et, sur l'autre côté de cet axe de basculement, un sous-ensemble 21 comprenant une deuxième partie 22 de manche d'outil et la partie 12 de travail de la terre (une fourche de bêche dans l'exemple représenté).

La première partie 20 de manche d'outil comprend deux sous-parties, dont une partie de base 25 reliée à ladite deuxième partie 22 de manche d'outil et une partie 26 formant le manche de l'outil 1 proprement dit.

La partie de base 25 comprend ladite portion de montage à une extrémité, et présente, à son extrémité opposée, une portion de réception de la partie 26. Elle présente un coude 27 aux environs des trois quarts de sa longueur considérée depuis ladite portion de montage, ce coude 27 formant un angle de l'ordre de 135° entre les deux portions de la partie de base 25 séparées par ce coude 27.

Aux environs des deux tiers de sa longueur s'étendant entre la portion de montage et le coude 27, la partie de base 25 comprend deux pattes latérales 28 de montage d'un verrou pivotant 40 décrit plus loin.

La portion de réception de la partie 26 forme une chape de montage pivotant de cette partie 26 autour d'une broche de pivotement 29. Ce montage pivotant permet un repliage de la partie 26 en direction de ladite deuxième partie 22 de manche, afin de permettre un gain d'encombrement de l'outil 1 lorsque cet outil n'est pas utilisé.

La partie de base 25 comprend également, entre ladite portion de montage et lesdites pattes latérales 28, une portion de tube 30 formant un palier de pivotement du sous-ensemble 21. La deuxième partie 22 de manche d'outil est montée pivotante dans cette portion de tube 30 ; sa portion d'extrémité opposée à la partie 12 de travail de la terre présente, comme visible sur la figure 2, un pion 31, deux doigts 32 diamétralement opposés et une encoche 33.

Le pion 31 est monté sur la partie 22 de manière à maintenir axialement cette partie 22 par rapport au tube 30.

Les deux doigts 32 ont des longueurs telles que chacun d'eux est destiné à rencontrer la surface 8 formant came lors du passage de l'ensemble basculant 3 de ladite deuxième position montrée sur la figure 4 à ladite troisième position montrée sur la figure 5, puis à glisser contre la surface de la plaque 7 au fur et à mesure du basculement de l'ensemble 3 vers cette troisième position.

L'encoche 33 est aménagée depuis le bord libre de la partie 22. Elle est apte à recevoir en elle, de façon ajustée, une extension longitudinale 41 que forme le verrou 40, cette réception permettant de réaliser un blocage du pivotement du sous-ensemble 21 selon l'axe de la partie de manche 22.

Du côté de la partie 12 de travail de la terre, la partie 22 comprend un pion 35 de blocage axial de cette partie 22 vis-à-vis du tube 30.

La partie 12 de travail de la terre est, quant à elle, de type classique, et est reliée à la partie 22 par un manchonnage, de manière également classique.

Ainsi que cela apparaît particulièrement sur les figures 1A et 2, le verrou 40 est formé par une plaquette, notamment de tôle. Cette plaquette forme, à une extrémité opposée aux pattes 28, l'extension longitudinale 41 précitée et forme également deux extensions latérales médianes 42 et deux extensions latérales de base 43.

Chaque extension latérale médiane 42 est destinée à venir rencontrer la surface 8 formant came lorsque l'ensemble basculant 3 est amené à passer de ladite deuxième position visible sur la figure 4 à ladite troisième position visible sur la figure 5, juste avant que le doigt 32 situé sur le même côté que la plaque 7 rencontre cette même surface de came. Pour ce faire, chaque extension latérale médiane 42 est aménagée de telle sorte que, dans ladite deuxième position, elle se trouve située à un niveau légèrement inférieur, dans un plan vertical, à celui auquel se trouve le doigt 32 situé sur le même côté, comme visible sur la figure 4.

Les deux extensions latérales de base 43 sont reçues dans des encoches que présentent les pattes 28. Chacune de ses encoches présente une entrée de largeur légèrement supérieure à l'épaisseur de ces extensions latérales 43, qui débouche dans une portion circulaire de diamètre légèrement supérieur à la largeur de ces mêmes extensions 43. Il se comprend que le verrou 40 est monté sur les pattes 28 avant la mise en place du sous-ensemble 21 au travers du tube 30 et avant la mise en place d'une tige filetée d'arrêt 45 visible sur la figure 2 ; le verrou 40 est présenté vis-à-vis desdites encoches de telle sorte que ses extensions latérales 43 puissent être engagées en coulissement dans lesdites entrées puis, lorsque ces extensions sont dans les portions circulaires des encoches, est basculé vers sa position de montage montrée sur les figures. La tige filetée d'arrêt 45 est alors mise en place, pour assurer le montage définitif du verrou 40 sur ladite partie de base 25.

Il apparaît sur la figure 1 que, dans la position de l'outil 1 montrée sur cette figure, les encoches des pattes 28 se trouvent, dans cette position, sensiblement à la même hauteur que l'encoche 33, de sorte que l'extension longitudinale 41 du verrou 40 est et reste engagée par gravité dans l'encoche 33.

En pratique, l'utilisateur détermine le côté de l'outil 1 sur lequel il souhaite que la partie de travail 12 déverse la terre qui aura été fragmentée et soulevée au moyen de l'outil 1, et positionne la plaque 7 du côté de l'outil 1 opposé à ce côté. Dans l'exemple représenté, l'utilisateur a choisi que le déversement se fasse sur la gauche de l'outil 1, de sorte que la plaque 7 a été montée sur le côté droit de l'outil 1.

Dans une position de départ, l'outil 1 est tel que montré sur la figure 1 ; l'extension longitudinale 41 du verrou 40 est alors engagée par gravité dans l'encoche 33, compte tenu de la position précitée des encoches des pattes 28 vis-à-vis de l'encoche 33, ce qui assure un blocage du pivotement du sous-ensemble 11 par rapport au reste de l'outil 1

Pour opérer un bêchage, l'utilisateur incline l'outil 1 pour insérer ladite partie de travail 12 dans la terre, comme visible sur la figure 3. L'inclinaison adéquate de l'outil 1 est déterminée par la venue de la portion avant de la plaquette 10 au contact du sol.

Une fois cette insertion réalisée, l'utilisateur ramène l'ensemble de l'outil 1 dans ladite deuxième position visible sur la figure 4, dans laquelle ledit montant 5 est sensiblement vertical, cette position étant définie par la venue de la portion arrière de la plaquette 10 contre le sol ; ce mouvement de l'outil 1 permet de fragmenter et de soulever une motte de terre 101 située devant la partie de travail 12. Dans cette position, l'extension longitudinale 41 du verrou 40 reste en engagement avec l'encoche 33, l'extension latérale 42 se trouvant à proximité de la surface 8 formant came mais sans rencontrer cette surface 8, donc sans soulèvement de ce verrou.

Lorsque l'utilisateur bascule l'ensemble 3 pour passer de cette position visible sur la figure 4 à la position visible sur la figure 5, l'extension latérale 42 rencontre la surface 8, ce qui soulève et fait pivoter le verrou 40 de façon à extraire l'extension longitudinale 41 hors de l'encoche 33, puis le doigt 32 vient rencontrer la surface 8, ce qui provoque, au long de ce mouvement de basculement, le pivotement du sous-ensemble 21, jusqu'à la position de complet pivotement visible sur les figures 5 et 6.

Ce mouvement de complet basculement est facilité par l'orientation de la partie de manche 26 proprement dite par rapport à la partie de base 25, résultant du coude 27, qui permet à l'utilisateur de ne pas avoir à trop se baisser pour accomplir ce mouvement.

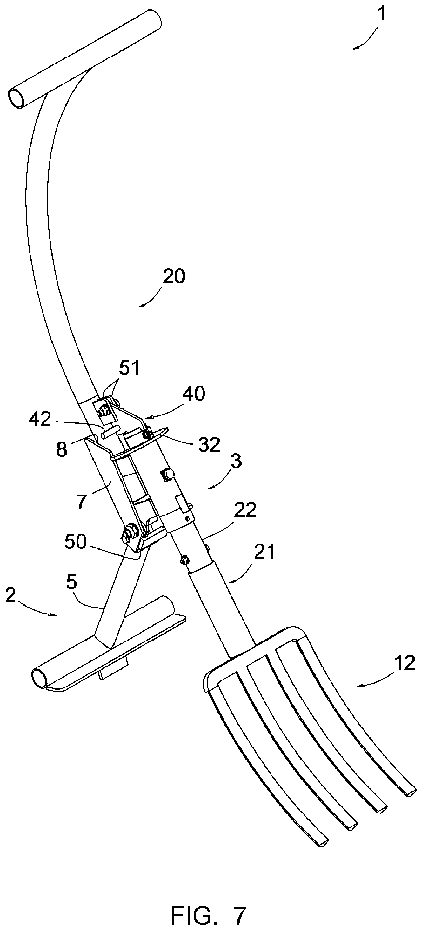

Les figures 7 à 10 montrent l'outil 1 conforme à l'invention selon une deuxième forme de réalisation. Par simplification, les éléments déjà décrits qui se retrouvent dans cette deuxième forme de réalisation de façon identique ou similaire sont désignés par les mêmes références numériques.

Dans cette deuxième forme de réalisation, la plaque 7 formant la surface de came 8 est fixée à un étrier 50 solidaire de l'extrémité supérieure du montant 5 que forme l'embase de support 2.

Le verrou 40 est formé par une plaquette d'extension horizontale, c'est-à-dire s'étendant dans un plan perpendiculaire à l'axe de pivotement de l'ensemble basculable allongé 3, et est monté pivotant sur la première partie 20 de manche d'outil au moyen de deux parois 51 formant une chape. En lieu et place d'une extension latérale 42 telle que décrite précédemment, le verrou 40 présente un doigt saillant 42 apte à venir rencontrer la surface de came 8.

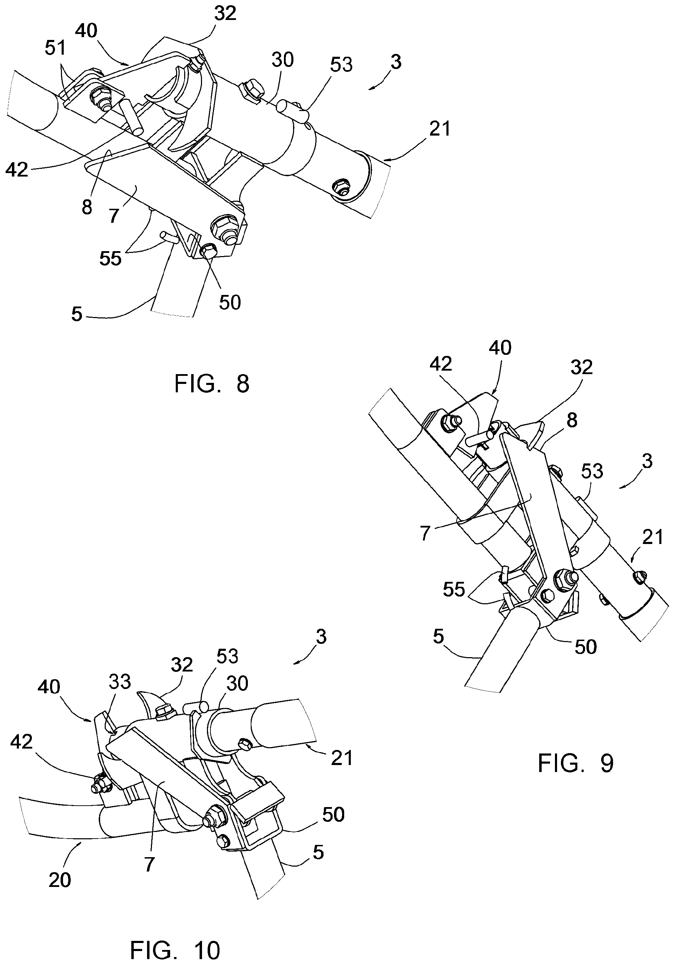

La deuxième partie 22 de manche d'outil comprend, en lieu et place d'un doigt 32 décrit précédemment, une plaquette transversale 32 dont un bord inférieur courbe vient rencontrer la surface de came 8 comme visible sur la figure 9 afin de faire pivoter le sous-ensemble 21, de la même façon que décrit précédemment. Ce bord inférieur courbe permet de faire pivoter le sous-ensemble 21 sur une large amplitude, comme visible sur la figure 10, jusqu'à ce qu'une pièce cylindrique 53 fixée au sous-ensemble 21, formant une butée, rencontre une surface radiale de butée correspondante, ainsi que cela est également visible sur cette figure 10.

En référence à la figure 7, il apparaît en outre que, dans cette deuxième forme de réalisation, ladite première partie 20 de manche d'outil est formée par une pièce unique présentant une forme courbe au-delà du verrou 40. Le manche n'est alors pas repliable.

Il apparaît également que deux pions 55 légèrement courbes sont solidaires, pour l'un d'entre eux, du montant 5, et, pour l'autre d'entre eux, de la première partie 20 de manche d'outil ; ces pions sont destinés à recevoir un ressort (non représenté par souci de clarté du dessin) qui est comprimé lorsque l'ensemble basculable allongé 3 passe de ladite première position à ladite deuxième position. Ce ressort permet ainsi, par rappel élastique, une assistance au retour de cet ensemble 3 dans ladite première position.

Comme cela apparaît de ce qui précède, l'invention fournit un outil 1 à fragmenter et à retourner de la terre, notamment de type bêche ou pelle, présentant les avantages déterminants d'être nettement moins fatigant, et possiblement nettement moins douloureux, à utiliser qu'un outil homologue existant, tout en conservant une manipulation facile et sûre.

L'invention a été décrite ci-dessus en référence à une forme de réalisation préférée, qui n'est cependant nullement limitative ; la protection conférée est celle définie par les revendications annexées.

## Revendications

1. Outil (1) à fragmenter et à retourner de la terre, notamment de type bêche ou pelle, comprenant un manche (20, 22) et une partie de travail (12), comprenant
- une embase de support (2), présentant un pied d'appui (4) contre la terre et un montant (5) ;
- un ensemble basculable allongé (3), monté basculable sur ledit montant (5) selon un axe perpendiculaire à l'axe longitudinal de cet ensemble basculable ; l'ensemble basculable (3) est mobile entre une première position, d'insertion de la partie de travail (12) dans la terre, une deuxième position, de soulèvement d'une motte de terre fragmentée au moyen de l'outil (1), et une troisième position, de déversement de cette motte de terre ; l'ensemble basculable (3) comprend, sur un côté de l'axe de basculement, une première partie (20) de manche d'outil et, sur l'autre côté de cet axe de basculement, un sous-ensemble (21) comprenant une deuxième partie (22) de manche d'outil et la partie (12) de travail de la terre ; ce sous-ensemble (21) est monté pivotant par rapport à la première partie (20) de manche d'outil selon l'axe longitudinal de la deuxième partie (22) de manche d'outil, ce pivotement permettant de faire tourner la partie (12) de travail de ladite deuxième position de soulèvement de la motte de terre fragmentée, à ladite troisième position de déversement de cette motte de terre ;
- des moyens (7, 8, 32) de commande du pivotement dudit sous-ensemble (21) lorsque l'ensemble basculable (3) passe de ladite deuxième position à ladite troisième position ;
l'outil étant **caractérisé en ce qu'**il comprend en outre :
- un verrou mobile (40), déplaçable entre une position de blocage du pivotement dudit sous-ensemble (21) et une position de déblocage de ce pivotement ; et
- des moyens (28, 43, 7, 8, 42) de déplacement du verrou (40), plaçant automatiquement ce verrou dans sa position de blocage lorsque l'ensemble basculable (3) est dans ladite première position, et faisant passer ce verrou (40) de cette position de blocage à sa position de déblocage lorsque ledit ensemble basculable (3) est déplacé de ladite deuxième position à ladite troisième position, ce déblocage intervenant juste avant que lesdits moyens de commande (7, 8, 32) réalisent la commande du pivotement du sous-ensemble (21).

2. Outil (1) selon la revendication 1, **caractérisé en ce que** les moyens de commande sont sous la forme d'une surface (8) formant came aménagée sur l'embase (2) et d'un doigt (32) faisant saillie latéralement de ladite deuxième partie de manche, ce doigt (32) venant porter contre cette surface (8) formant came lors du basculement de l'ensemble basculable (3) de ladite deuxième position à ladite troisième position.

3. Outil (1) selon la revendication 2, **caractérisé en ce que** :
- la surface (8) formant came est aménagée sur une pièce (7) séparée de l'embase (2), apte à être montée sur un côté latéral de l'embase (2) ou sur le côté latéral opposé de cette embase (2), et
- ladite deuxième partie (22) de manche comprend deux doigts (32) faisant saillie latéralement, diamétralement opposés l'un à l'autre, le doigt situé sur le côté latéral sur lequel se trouve ladite pièce séparée (7) étant apte à rencontrer la surface (8) formant came aménagée par cette pièce (7) pour faire pivoter ledit sous-ensemble (21).

4. Outil (1) selon la revendication 2 ou la revendication 3, **caractérisé en ce que** le verrou (40) est sous la forme d'une plaquette montée basculante sur ladite première partie (20) de manche selon un axe transversal à l'axe longitudinal de cette première partie (20) de manche, cette plaquette formant une extension longitudinale apte à venir en engagement avec une encoche (33) aménagée dans l'extrémité de ladite deuxième partie (22) de manche, ladite plaquette comprenant une première extension latérale (42) apte, lors du passage de l'ensemble basculant (3) de ladite deuxième position à ladite troisième position, à rencontrer ladite surface (8) formant came ; cette première extension latérale (42) est aménagée de telle sorte que, dans ladite deuxième position, elle se trouve située à un niveau légèrement inférieur, dans un plan vertical, à celui auquel se trouve le doigt (32) situé sur le même côté qu'elle, de sorte que ladite première extension latérale (42) est apte à rencontrer ladite surface (8) formant came juste avant que le doigt (32) situé du même côté que ladite première extension latérale (42) rencontre cette même surface (8) formant came.

5. Outil (1) selon la revendication 4, **caractérisé en ce que** la plaquette comprend une deuxième extension latérale (42), sur un côté latéral opposé à celui sur lequel se trouve ladite première extension latérale (42), cette deuxième extension latérale (42) étant symétrique à la première extension latérale (42) par rapport à un plan longitudinal médian de l'outil (1).

6. Outil (1) selon la revendication 4 ou la revendication 5, **caractérisé en ce que** l'axe de basculement du verrou (40) est situé à une distance de ladite encoche (33) telle que ce verrou (40) soit incliné en direction de ladite deuxième partie (22) de manche tant dans ladite première, deuxième ou troisième position et que son maintien automatique en position d'engagement dans ladite encoche (33) soit réalisé par gravité.

7. Outil (1) selon la revendication 1, **caractérisé en ce que** le verrou est sous la forme d'un doigt coulissant au travers de ladite première partie de manche et venant en appui contre l'embase lorsque l'ensemble basculable est amené en position de soulèvement puis de déversement, cette venue en appui déplaçant ce doigt entre les positions de blocage du pivotement dudit sous-ensemble et de déblocage de ce pivotement, le doigt coulissant étant maintenu normalement dans ladite position de blocage au moyen d'un ressort de rappel engagé sur lui, prenant appui contre ce doigt d'une part et contre ladite première partie de manche, du côté de l'embase.

8. Outil (1) selon l'une des revendications 1 à 7, **caractérisé en ce que** ladite première partie (20) de manche d'outil est coudée (27) de telle sorte qu'une partie de base qu'elle comprend, située principalement d'un côté de ce coude, forme un angle de l'ordre de 135° avec une partie de manche proprement dit, située de l'autre côté de ce coude (27).

9. Outil (1) selon l'une des revendications 1 à 8, **caractérisé en ce que** le pied d'appui (4) comprend une plaquette (10) de positionnement de l'outil (1) contre le sol, reliée à son côté inférieur, cette plaquette (10) présentant une portion faisant saillie vers l'arrière de l'outil (1), qui s'étend dans un plan perpendiculaire à l'axe longitudinal du montant (5) relié au pied appui (4), et une portion faisant saillie vers l'avant de l'outil (1), qui s'étend selon un angle de l'ordre de 45° par rapport à ce plan.

10. Outil (1) selon l'une des revendications 1 à 9, **caractérisé en ce que** ladite première partie (20) de manche de l'outil est en deux sous-parties, dont une partie de base (25) reliée à ladite deuxième partie (22) de manche d'outil (1) et une partie (26) formant manche proprement dit, cette partie (26) formant manche étant reliée de façon pivotante à ladite partie de base (25), et/ou étant démontable par rapport à cette partie de base (25).

11. Outil (1) selon la revendication 1, **caractérisé en ce que** les moyens de commande sont sous la forme d'une surface (8) formant came aménagée sur l'embase (2) et d'une plaquette transversale (32) faisant saillie latéralement de ladite deuxième partie de manche, cette plaquette transversale (32) présentant un bord inférieur courbe qui vient porter contre cette surface (8) formant came lors du passage de l'ensemble basculable allongé (3) de ladite deuxième position à ladite troisième position.

12. Outil (1) selon la revendication 11, **caractérisé en ce que** le verrou (40) est sous la forme d'une plaquette montée basculante sur ladite première partie (20) de manche selon un axe transversal à l'axe longitudinal de cette première partie (20) de manche, cette plaquette étant apte à venir en engagement avec une encoche (33) aménagée dans l'extrémité de ladite deuxième partie (22) de manche, ladite plaquette comprenant un doigt (42) apte, lors du passage de l'ensemble basculant (3) de ladite deuxième position à ladite troisième position, à rencontrer ladite surface (8) formant came ; ce doigt (42) est disposé de telle sorte qu'il vienne rencontrer ladite surface (8) formant came avant que ledit bord inférieur courbe de la plaquette transversale (32) rencontre la surface (8) formant came lors du passage de l'ensemble basculable allongé (3) de ladite deuxième position à ladite troisième position, de façon à libérer le verrou (40) avant que ce bord inférieur courbe porte contre la surface (8) formant came.

13. Outil (1) selon la revendication 11 ou la revendication 12, **caractérisé en ce que** deux pions (55) sont solidaires, pour l'un d'entre eux, du montant (5), et, pour l'autre d'entre eux, de ladite première partie (20) de manche d'outil ; ces pions (55) sont destinés à recevoir un ressort qui est comprimé lorsque l'ensemble basculable allongé (3) passe de ladite première position à ladite deuxième position.

14. Outil (1) selon l'une des revendications 11 à 13, **caractérisé en ce que** ladite première partie (20) de manche d'outil est formée par une pièce unique présentant une forme courbe au-delà du verrou (40).

## Patentansprüche

1. Werkzeug (1) zum Aufbrechen und Wenden von Erdreich, insbesondere vom Typ Spaten oder Schaufel, das einen Griff (20, 22) und einen Arbeitsabschnitt (12) umfasst, umfassend:
- eine Stützbasis (2), die einen Stützfuß (4) auf dem Erdreich und einen Ständer (5) aufweist;
- eine längliche Kippanordnung (3), die kippbar an dem Ständer (5) gemäß einer zur Längsachse dieser Kippanordnung senkrechten Achse angebracht ist; wobei die Kippanordnung (3) zwischen einer ersten Position zum Einsetzen des Arbeitsabschnitts (12) in das Erdreich und einer zweiten Position zum Anheben eines Klumpens aufgebrochenen Erdreichs mittels des Werkzeugs (1) und einer dritten Position zum Abladen dieses Erdreichklumpens bewegbar ist; die Kippanordnung (3) auf einer Seite der Kippachse einen ersten Werkzeuggriffabschnitt (20) und auf der anderen Seite dieser Kippachse eine Unteranordnung (21) mit einem zweiten Werkzeuggriffabschnitt (22) und dem Erdbearbeitungsabschnitt (12) umfasst; wobei diese Unteranordnung (21) relativ zum ersten Werkzeuggriffabschnitt (20) gemäß der Längsachse des zweiten Werkzeuggriffabschnitts (22) schwenkbar angebracht ist, wobei dieses Schwenken das Drehen des Arbeitsabschnitts (12) aus der zweiten Position zum Anheben des Klumpens aufgebrochenen Erdreichs in die dritte Position zum Abladen dieses Erdreichklumpens ermöglicht;
- Mittel (7, 8, 32) zum Steuern des Schwenkens der Unteranordnung (21), wenn die Kippanordnung (3) aus der zweiten Position in die dritte Position wechselt;
wobei das Werkzeug **dadurch gekennzeichnet ist, dass** es ferner umfasst:
- einen beweglichen Riegel (40), der zwischen einer Sperrposition des Schwenkens der Unteranordnung (21) und einer Freigabeposition dieses Schwenkens beweglich ist; und
- Mittel (28, 43, 7, 8, 42) zum Verschieben des Riegels (40), die diesen Riegel automatisch in seine Sperrposition bringen, wenn die Kippanordnung (3) in der ersten Position ist, und die diesen Riegel (40) aus dieser Sperrposition in seine Freigabeposition verlagern, wenn die Kippanordnung (3) aus der zweiten Position in die dritte Position bewegt wird, wobei diese Freigabe unmittelbar bevor die Steuermittel (7, 8, 32) die Steuerung des Schwenkens der Unteranordnung (21) durchführen, erfolgt.

2. Werkzeug (1) nach Anspruch 1, **dadurch gekennzeichnet, dass** die Steuermittel die Form einer Nockenfläche (8), die an der Basis (2) angeordnet ist, und eines Fingers (32) haben, der seitlich aus dem zweiten Griffabschnnitt vorsteht, wobei dieser Finger (32) beim Kippen der Kippanordnung (3) aus der zweiten Position in die dritte Position gegen diese Nockenfläche (8) zur Anlage kommt.

3. Werkzeug (1) nach Anspruch 2, **dadurch gekennzeichnet, dass**:
- die Nockenfläche (8) auf einem von der Basis (2) getrennten Teil (7) angeordnet ist, das an einer Seitenfläche der Basis (2) oder an einer dieser Basis (2) gegenüberliegenden Seitenfläche anbringbar ist, und
- der zweite Griffabschnitt (22) zwei seitlich vorstehende Finger (32) aufweist, die einander diametral gegenüberliegen, wobei der Finger, der sich auf der Seitenfläche befindet, auf der sich das getrennte Teil (7) befindet, auf die durch dieses Teil (7) eingerichtete Nockenfläche (8) treffen kann, um die Unteranordnung (21) zu schwenken.

4. Werkzeug (1) nach Anspruch 2 oder Anspruch 3, **dadurch gekennzeichnet, dass** der Riegel (40) in Form einer Platte vorliegt, die kippbar auf dem ersten Griffabschnitt (20) gemäß einer zur Längsachse dieses ersten Griffabschnitts (20) transversalen Achse angebracht ist, wobei diese Platte eine Längserweiterung bildet, die in eine im Ende des zweiten Griffabschnitts (22) eingerichtete Kerbe (33) eingreifen kann, wobei die Platte eine erste seitliche Erweiterung (42) aufweist, die beim Wechsel der Kippanordnung (3) aus der zweiten Position in die dritte Position auf die Nockenfläche (8) treffen kann; wobei diese erste seitliche Erweiterung (42) derart eingerichtet ist, dass sie sich in der zweiten Position in einer vertikalen Ebene auf einem etwas niedrigeren Niveau befindet als der Finger (32), der sich auf derselben Seite wie sie befindet, so dass die erste seitliche Erweiterung (42) auf die Nockenfläche (8) treffen kann, kurz bevor der Finger (32), der sich auf derselben Seite wie die erste seitliche Erweiterung (42) befindet, auf diese selbe Nockenfläche (8) trifft.

5. Werkzeug (1) nach Anspruch 4, **dadurch gekennzeichnet, dass** die Platte eine zweite seitliche Erweiterung (42) auf einer Seite aufweist, die der Seite gegenüberliegt, auf der sich die erste seitliche Erweiterung (42) befindet, wobei diese zweite seitliche Erweiterung (42) bezogen auf eine Längsmittelebene des Werkzeugs (1) symmetrisch zu der ersten seitlichen Erweiterung (42) ist.

6. Werkzeug (1) nach Anspruch 4 oder Anspruch 5, **dadurch gekennzeichnet, dass** sich die Kippachse des Riegels (40) in einem Abstand von der Kerbe (33) derart befindet, dass dieser Riegel (40) sowohl in der ersten, zweiten oder dritten Position zum zweiten Griffabschnitt (22) hin geneigt ist und dass sein automatisches Halten in der Eingriffposition in der Kerbe (33) durch Schwerkraft erreicht wird.

7. Werkzeug (1) nach Anspruch 1, **dadurch gekennzeichnet, dass** der Riegel in Form eines Fingers vorliegt, der durch den ersten Griffabschnitt gleitet und gegen die Basis zur Anlage kommt, wenn die Kippanordnung in Anhebe- und dann Abladeposition gebracht wird, wobei dieses Inanschlagbringen diesen Finger zwischen der Sperrposition des Schwenkens der Unteranordnung und der Freigabeposition dieses Schwenkens verschiebt, wobei der gleitende Finger normal in der Sperrposition durch eine auf ihn einwirkende Rückstellfeder gehalten wird, die sich einerseits an diesem Finger und andererseits am ersten Griffabschnitt auf der Seite der Basis abstützt.

8. Werkzeug (1) nach einem der Ansprüche 1 bis 7, **dadurch gekennzeichnet, dass** der erste Werkzeuggriffabschnitt (20) derart gekrümmt (27) ist, dass ein Basisabschnitt, den er umfasst, der sich im Wesentlichen auf einer Seite dieser Krümmung befindet, mit einem eigentlichen Griffabschnitt, der auf der anderen Seite dieser Krümmung (27) befindet, einen Winkel in der Größenordnung von 135° bildet.

9. Werkzeug (1) nach einem der Ansprüche 1 bis 8, **dadurch gekennzeichnet, dass** der Stützfuß (4) eine mit seiner Unterseite verbundene Platte (10) zur Positionierung des Werkzeugs (1) auf dem Boden aufweist, wobei diese Platte (10) einen zur Rückseite des Werkzeugs (1) vorstehenden Abschnitt aufweist, der sich in einer Ebene senkrecht zur Längsachse des mit dem Stützfuß (4) verbundenen Ständers (5) erstreckt, und einen zur Vorderseite des Werkzeugs (1) vorstehenden Teil, der sich in einem Winkel in der Größenordnung von 45° zu dieser Ebene erstreckt.

10. Werkzeug (1) nach einem der Ansprüche 1 bis 9, **dadurch gekennzeichnet, dass** der erste Werkzeuggriffabschnitt (20) aus zwei Unterabschnitten besteht, einem mit dem zweiten Griffabschnitt (22) des Werkzeugs (1) verbundenen Basisabschnitt (25) und einem eigentlichen Griffabschnitt (26), wobei dieser Griffabschnitt (26) schwenkbar mit dem Basisabschnitt (25) verbunden ist und/oder in Bezug auf diesen Basisabschnitt (25) demontierbar ist.

11. Werkzeug (1) nach Anspruch 1, **dadurch gekennzeichnet, dass** die Steuermittel die Form einer Nockenfläche (8) vorliegen, die an der Basis (2) eingerichtet ist, und einer Querplatte (32), die seitlich von dem zweiten Griffabschnitt vorsteht, wobei diese Querplatte (32) einen gekrümmten unteren Rand aufweist, der gegen diese Nockenfläche (8) beim Wechsel der länglichen Kippanordnung (3) aus der zweiten Position in die dritte Position zur Anlage kommt.

12. Werkzeug (1) nach Anspruch 11, **dadurch gekennzeichnet, dass** der Riegel (40) in Form einer Platte vorliegt, die kippbar auf dem ersten Griffabschnitt (20) gemäß einer zur Längsachse dieses ersten Griffabschnitts (20) transversalen Achse angebracht ist, wobei diese Platte in eine am Ende des zweiten Griffabschnitts (22) eingerichtete Kerbe (33) eingreifen kann, wobei die Platte einen Finger (42) aufweist, der beim Wechsel der Kippanordnung (3) aus der zweiten Position in die dritte Position imstande ist, auf die Nockenfläche (8) zu treffen; wobei dieser Finger (42) derart angeordnet ist, dass er auf die Nockenfläche (8) trifft, bevor der untere gekrümmte Rand der Querplatte (32) beim Wechsel der länglichen Kippanordnung (3) aus der zweiten Position in die dritte Position auf die Nockenfläche (8) trifft, um den Riegel (40) zu lösen, bevor diese untere gekrümmte Kante gegen die Nockenfläche (8) zur Anlage kommt.

13. Werkzeug (1) nach Anspruch 11 oder Anspruch 12, **dadurch gekennzeichnet, dass** zwei Stifte (55), einer von ihnen mit dem Ständer (5) und der andere von ihnen mit dem ersten Werkzeuggriffabschnitt (20), fest verbunden sind; wobei diese Stifte (55) dazu bestimmt sind, eine Feder aufzunehmen, die zusammengedrückt wird, wenn die längliche Kippanordnung (3) aus der ersten Position in die zweite Position wechselt.

14. Werkzeug (1) nach einem der Ansprüche 11 bis 13, **dadurch gekennzeichnet, dass** der erste Werkzeuggriffabschnitt (20) aus einem einzigen Stück mit einer jenseits des Riegels (40) gekrümmten Form gebildet ist.

## Claims

1. Tool (1) for breaking up and turning over soil, particularly of a spade or shovel type, comprising a handle (20, 22) and a working part (12), comprising:
- a support base (2), having a foot (4) for placing on the ground and a post (5);
- a long tiltable assembly (3), tiltably mounted on said post (5) about an axis perpendicular to the longitudinal axis of this tiltable assembly; the tiltable assembly (3) is movable between a first position, of insertion of the working part (12) into the ground, a second position, of lifting a piece of fragmented clod of soil by means of the tool (1), and a third position, of discharging this clod of soil; the tiltable assembly (3) comprises, on one side of the tilting axis, a first tool handle part (20) and, on the other side of this tilting axis, a sub-assembly (21) comprising a second tool handle part (22) and the soil working part (12); this sub-assembly (21) is pivotally mounted with respect to the first tool handle part (20) along the longitudinal axis of the second tool handle part (22), this pivoting allowing the working part (12) to rotate from said second position of lifting the fragmented clod of soil to said third position of discharging this clod of soil;
- means (7, 8, 32) for controlling the pivoting of said subassembly (21) when the tiltable assembly (3) moves from said second position to said third position;
the tool being **characterized in that** it further comprises:
- a mobile lock (40), movable between a locking position in which the pivoting of said subassembly (21) is locked and an unlocking position in which this pivoting is unlocked; and
- means (28, 43, 7, 8, 42) for moving the lock (40), automatically placing this lock in its locking position when the tiltable assembly (3) is in said first position, and moving this lock (40) from this locking position to its unlocking position when said tiltable assembly (3) is moved from said second position to said third position, this unlocking occurring just before said control means (7, 8, 32) performs the control of the pivot of the subassembly (21).

2. Tool (1) according to claim 1, **characterized in that** the control means are in the form of a cam surface (8) arranged on the base (2) and a shank (32) projecting laterally from said second handle part, this shank (32) being brought to bear against this cam surface (8) when the tiltable assembly (3) is tilted from said second position to said third position.

3. Tool (1) according to claim 2, **characterized in that**:
- the cam surface (8) is arranged on a part (7) separate from the base (2), suitable for mounting on a lateral side of the base (2) or on the opposite lateral side of this base (2), and
- said second handle part (22) comprises two shanks (32) projecting laterally, diametrically opposed to each other, the shank located on the lateral side on which said separate part (7) is located being capable to encounter the cam surface (8) provided by this part (7) to rotate said subassembly (21).

4. Tool (1) according to claim 2 or claim 3, **characterized in that** the lock (40) is in the form of a plate tiltably mounted on said first handle part (20) so as to be tiltable along an axis transverse to the longitudinal axis of said first handle part (20), this plate forming a longitudinal extension capable of engaging with a notch (33) arranged in the end of said second handle part (22), said plate comprising a first lateral extension (42) capable, when the tilting assembly (3) passes from said second position to said third position, of encountering said cam surface (8); said first lateral extension (42) is arranged such that, in said second position, it is located at a slightly lower level, in a vertical plane, than that at which the shank (32) located on the same side is located, so that said first lateral extension (42) is capable to encounter said cam surface (8) just before the shank (32) located on the same side as said first lateral extension (42) encounters said cam surface (8).

5. Tool (1) according to claim 4, **characterized in that** the plate comprises a second lateral extension (42), on a lateral side opposite to the one on which said first lateral extension (42) is located, said second lateral extension (42) being symmetrical to the first lateral extension (42) with respect to a median longitudinal plane of the tool (1).

6. Tool (1) according to claim 4 or claim 5, **characterized in that** the pivot axis of the lock (40) is located at a distance from said notch (33) such that said lock (40) is inclined towards said second handle portion (22) both in said first, second or third position and that its automatic retention in the engagement position in said notch (33) is achieved by gravity.

7. Tool (1) according to claim 1, **characterized in that** the lock is in the form of a shank sliding through said first handle part and bearing against the base when the tiltable assembly is brought into the lifting position and then the discharging position, this bearing making this shank moving between the positions of locking the pivoting of said subassembly and of unlocking this pivoting, the sliding shank being normally held in said locking position by means of a return spring engaged thereon, bearing against this shank on the one hand and against said first handle part, on the side of the base.

8. Tool (1) according to one of claims 1 to 7, **characterized in that** said first tool handle portion (20) is bent (27) such that a base portion it comprises, located mainly on one side of said bent, forms an angle of about 135° with a handle portion itself, located on the other side of said bent (27).

9. Tool (1) according to one of claims 1 to 8, **characterized in that** the support foot (4) comprises a plate (10) for positioning the tool (1) against the ground, connected to its lower side, this plate (10) having a portion projecting towards the rear of the tool (1), which extends in a plane perpendicular to the longitudinal axis of the post (5) connected to the support foot (4), and a portion projecting forward of the tool (1), which extends at an angle of about 45° with respect to this plane.

10. Tool (1) according to one of claims 1 to 9, **characterized in that** said first handle part (20) of the tool is formed in two subparts, including a base part (25) connected to said second tool handle part (22) and a handle part (26) itself, said handle part (26) being pivotally connected to said base part (25), and/or being dismountable with respect to said base part (25).

11. Tool (1) according to claim 1, **characterized in that** the control means are in the form of a cam surface (8) arranged on the base (2) and a transverse plate (32) projecting laterally from said second handle part, said transverse plate (32) having a curved lower edge which is moved so as to bear against said cam surface (8) when the long tiltable assembly (3) passes from said second position to said third position.

12. Tool (1) according to claim 11, **characterized in that** the lock (40) is in the form of a plate mounted tiltably on said first handle part (20) along an axis transverse to the longitudinal axis of said first handle part (20), this plate being able to engage with a notch (33) arranged in the end of said second handle part (22), said plate comprising a shank (42) capable, when the tilting assembly (3) passes from said second position to said third position, to encounter said cam surface (8); said shank (42) is arranged so that it encounters said cam surface (8) before said lower curved edge of the transversal plate (32) encounters the cam surface (8) when the long tiltable assembly (3) passes from said second position to said third position, so as to release the lock (40) before said lower curved edge bears against the cam surface (8).

13. Tool (1) according to claim 11 or claim 12, **characterized in that** two pins (55) are integral, for one of them, with the post (5) and, for the other of them, with said first tool handle part (20); these pins (55) are intended to receive a spring which is compressed when the long tiltable assembly (3) passes from said first position to said second position.

14. Tool (1) according to one of claims 11 to 13, **characterized in that** said first tool handle portion (20) is formed by a single part having a curved shape beyond the lock (40).
